# EUROPÄISCHE PATENTSCHRIFT

(11) **EP 3 458 188 B1**
(45) Veröffentlichungstag und Bekanntmachung des Hinweises auf die Patenterteilung: **02.09.2020**
(21) Anmeldenummer: 17726180.7
(22) Anmeldetag: 22.05.2017
(51) Int. Cl.: B01J 13/00, C01B 33/158, C04B 28/24, C04B 14/38, C04B 38/00, C09C 1/30, B01J 19/24

(54) **ANLAGE UND VERFAHREN ZUR HERSTELLUNG EINES AEROGEI-VERBUNDWERKSTOFFS**
SYSTEM AND METHOD FOR PRODUCING AN AEROGEL COMPOSITE MATERIAL
INSTALLATION ET PROCÉDÉ DE PRODUCTION D'UN MATÉRIAU COMPOSITE AÉROGEL

(30) Priorität: 20.05.2016 CH 6562016
(43) Veröffentlichungstag der Anmeldung: 27.03.2019
(73) Patentinhaber: Rockwool International A/S, 2640 Hedehusene (DK)
(72) Erfinder: EGLI, Christoph, 8853 Lachen/SZ (CH); KYM, Ivo, 8730 Uznach/SG (CH)
(74) Vertreter: Riederer Hasler & Partner Patentanwälte AG
(86) Internationale Anmeldenummer: PCT/CH2017/000049
(87) Internationale Veröffentlichungsnummer: WO 2017/197539

(56) Entgegenhaltungen:
- EP-A1- 1 690 849
- WO-A1-94/08681
- WO-A1-2010/126792
- WO-A1-2013/053951
- US-A- 5 679 312
- US-A1- 2006 260 927

## Beschreibung

### Gebiet der Erfindung

Die vorliegende Erfindung betrifft eine Anlage und ein Verfahren zur Herstellung eines Aerogel-Verbundwerkstoffs gemäss den Oberbegriffen der Ansprüche 1 und 9.

### Stand der Technik

Aerogele haben eine niedrige Dichte, grosse Porosität mit offenen Poren im Bereich < 50nm und eine grosse innere Oberfläche. Daraus resultiert eine niedrige Wärmeleitfähigkeit. Entsprechend eignen sich Aerogele auch als Wärmedämmstoffe. Die hohe Porosität führt aber auch zu einer geringen mechanischen Stabilität des Aerogels.

In den letzten Jahren sind deshalb Verbundwerkstoffe aus Fasermaterialien und Aerogelen vorgeschlagen worden. Solche Verbundwerkstoffe können beispielsweise als Dämmstoffe eingesetzt werden. In der WO 93/06044 ist beispielsweise ein Verfahren zur Herstellung eines Aerogelmatrixverbundwerkstoffes mit folgenden Verfahrensschritten offenbart:
- Herstellung eines Aerogel-Vorläufers
- Mischen des Aerogel-Vorläufers mit Fasern,
- Altern des die Fasern enthaltenen Aerogel-Vorläufers zur Herstellung eines Gels,
- Eintauchen des Gels in ein zur superkritischen Trocknung geeignetes Lösungsmittel und
- Trocknen des Gels unter superkritischen Bedingungen.

Als Fasern, welche im Aerogel eingebettet sein können, eignen sich u.a. auch Glas- oder Steinwollefasern. Das beschriebene Verfahren hat allerdings den Nachteil, dass das Gel unter superkritischen Bedingungen getrocknet werden muss, wofür ein Autoklav erforderlich üblicherweise mindestens ein Lösungsmittelwechsel vorgenommen wird. Dies ist ein sehr aufwändiges und zeitraubendes Verfahren. Die Trocknung erfordert einen speziellen apparativen Aufwand (Druckreaktor für das Kritisch-Punkt-Trocknen; z.B. Trocknung CO₂ bei >74bar/>30°C). Dementsprechend ist die superkritische Trocknung von Aerogelen nur für kleine Ansätze und im Labormassstab geeignet.

Wegen der Aufwändigkeit der superkritischen Trocknung von Gelen wurde ein Verfahren entwickelt, nach welchem auch eine unterkritische Trocknung des Gels unter 150 °C im Umluftstrom und bei Normaldruck möglich ist. Bei der unterkritischen Trocknung eines Gels sollen die freien Si-OH-Gruppen des entstandenen Gels für eine weitere Kondensation zunächst desaktiviert werden. Dies geschieht z.B. durch Zugabe von Trimethylchlorsilan zum Gel (siehe F. Schwertfeger, D. Frank, M. Schmidt, "Hydrophobic waterglass based aerogels without solvent exchange or supercritical drying" in Journal of Non-Crystalline Solids, 225 (1998), p. 24 - 29). Dabei reagiert das Trimethylchlorsilan unter Abspaltung von HCl mit den OH-Gruppen der Silicatoberfläche des Gels. Durch die Hydrophobierung der Silicat-Oberfläche wird das Wasser aus den Poren des Gels verdrängt. Hexamethyldisiloxan und überschüssiges Trimethylchlorsilan bilden die organische Phase und verbleiben in den Poren des Gels. Die entstehende Salzsäure sättigt zunächst die Wasserphase und entweicht dann bei höheren Konzentrationen in die Gasphase.

Das beschriebene Verfahren hat allerdings den Nachteil, dass es in Verbindung mit Steinwollefasern nicht eingesetzt werden kann, da die freiwerdende Salzsäure die Steinwollefasern teilweise auflöst. Steinwolle besteht zu min. 52 Gew.-proz. aus säurelöslichen Anteilen (Metalloxide wie Al₂O₃, CaO, MgO und Fe₂O₃). Aus diesem Grund werden zur Zeit Glaswolle basierte Aerogele verwendet, welche einerseits in saurem pH genügend stabil sind, andererseits aber nur ungenügende Temperaturfestigkeit im Brandfall aufweisen.

Die WO 94/25149 beschreibt ein Verfahren zur Herstellung eines hochporösen Xerogels, in welchem die Oberfläche des Gels mit oberflächenmodifizierenden Verbindungen hydrophobiert wird, um den Kapillardruck in den Poren des Gels vor der Trocknung zu reduzieren, damit das Gel beim abschliessenden Trocknungsschritt nicht kollabiert. Das Verfahren besteht aus einer Abfolge von Alterungs-, Wasch- und Trocknungsschritten. Das beschriebene Verfahren ist sehr aufwändig, weil vor und nach der Hydrophobierung mit Trimethylchlorsilan das Gel mit aprotischen Lösungsmitteln gewaschen werden muss. Nachteilig ist auch die bei der Hydrophobierung frei werdende Salzsäure, welche beispielsweise Steinwollefasern angreifen würde.

Die DE-OS-196 48 798 beschreibt ein Verfahren zur Herstellung von organisch modifizierten Aerogelen durch Oberflächenmodifikation des wässrigen Gels (ohne vorherigen Lösungsmittelaustausch) und anschliessender Trocknung. Als Silylierungsmittel kommt vorzugsweise Hexamethyldisiloxan (HMDSO) zum Einsatz. Dabei kann zusätzlich auch noch eine Base oder Säure als Katalysator der Hydrophobierungsreaktion vorhanden sein. Bevorzugte Säuren sind Salz-, Schwefel-, Phosphor-, Fluss-, Oxal-, Essig- oder Ameisensäure, wobei jedoch Salzsäure bevorzugt ist. Vor der Trocknung kann das silylierte Gel gegebenenfalls mit einem protischen oder aprotischen Lösungsmittel gewaschen werden. Gemäss Lehre der DE-OS-196 48 798 wird das gebildete Gel vorzugsweise unterkritisch getrocknet. Da gemäss Lehre der DE-OS-196 48 798 auf die Verwendung von organischen Lösungsmitteln vollständig verzichtet wird, können alle für das verwendete Silylierungsmittel erreichbaren SiOH-Gruppen mit dem Silylierungsmittel reagieren. Dadurch kann nach der DE-OS-196 48 798 ein sehr hoher Belegungsgrad der inneren Oberfläche des Hydrogels erreicht werden.

WO 2013/053951 offenbart ein Verfahren zur Herstellung eines Xerogels mit einer Wärmeleitfähigkeit zwischen 5 and 25 mW/mK, bei welchem in einem ersten Verfahrensschritt ein Sol in einen Reaktor gegossen wird, in dem vorgängig ein faseriges Verstärkungsmaterial angeordnet wurde. Das Sol wird anschliessend geliert, gealtert und hydrophobiert. Sodann wird das hydrophobierte Alcogel zuerst bei Temperaturen bis 80 °C. vorgetrocknet und dann unter subkritischen Bedingungen und Temperaturen > 100 °C und vorzugsweise zwischen 120 °C und 140 °C fertig getrocknet, bis der Alkoholrestgehalt < 3% ist. Gemäss einem Versuch (Beispiel 3) ist eine Vortrocknung absolut notwendig, um ein Material mit einer Wärmeleitfähigkeit von weniger als 25 mW/mK zu erhalten. Bei dem beschriebenen Verfahren können alle Verfahrensschritte, bis auf den letztgenannten Verfahrensschritt, im gleichen Reaktor durchgeführt werden. Von Bedeutung dabei ist, dass die Innenwände einen Abstand von 70 mm oder weniger voneinander haben. Werden grössere Wandabstände gewählt, dann weisen die hergestellten, faservertärkten Xerogele eine Wärmeleitfähgkeit > 25 mW/ Km auf.

Das im zweiten Verfahrensschritt gebildete Alcogel hat einen Alkoholgehalt zwischen 15 Gew.% und 90 Gew.% relativ zum Gewicht des ursprünglichen Sols. Die Hydrophobierung mit vorzugsweise HMDSO (Hexamethyldisiloxan) geschieht in Gegenwart von Salzsäure bei einem pH-Wert zwischen 1 und 3. Als Alternative für die Verwendung von Salzsäure wird Ameisensäure vorgeschlagen.

US Patent Nr. 5,746,992 bezieht sich auf die Herstellung eines Silizium-Aerogels. Beim Herstellungsprozess wird der Alkohol aus dem Alkogel unter subkritischen Bedingungen entfernt. Gemäss einem Ausführungsbeispiel findet die Hydrolyse von Tetraethoxysilan in zwei Stufen statt: In einer ersten Stufe werden das Tetraethoxysilan, Methanol, etwas Wasser und Salpetersäure in einem Glasbehälter miteinander vermischt, der Glasbehälter verschlossen und während 24 Stunden bei 60 °C gehalten. Während dieser Zeit hydrolysiert das Tetraethoxysilan unter sauren Bedingungen teilweise. Danach wird das Gemisch durch Zugabe einer wässrig/alkoholischen Ammoniaklösung basisch gestellt und nochmals während 24 Stunden bei 60 °C gehalten, um eine sekundäre Hydrolyse unter basischen Bedingungen zu erreichen. Unter diesen Bedingungen wir ein klares Kieselsäuregel erhalten, das nach der Trocknung in einem Ofen eine interne Partikelporosität von 74 Prozent hatte. Gemäss der US 5,746,992 ist keine Hydrophobierung des Gels vorgesehen.

Die WO 2015/014813 offenbart ein Verfahren zur Herstellung eines Aerogelmaterials, das demjenigen der WO 2013/053951 ähnlich ist. Wie in der WO 2013/053951 bereits beschrieben wird zuerst in einem alkoholischen Milieu ein Alkogel hergestellt, das man mit einem säurekatalytisch aktivierbaren Hydrophobierungsmittel, vorliegend HMDSO, reagieren lässt. Das Neue gegenüber der WO 2012/053951 ist, dass das Hydrophobierungsmittel HMDSO bereits im ersten Verfahrensschritt dem Siliziumoxid-Sol zugegeben wird. Der Volumenanteil des Hydrophobierungsmittels im Sol beträgt dabei 3 bis 80%. Dieses wird erst nach Bildung des Gels, das optional auch gealtert sein kann, durch Freisetzung oder Zugabe mindestens eines mit dem Hydrophobierungsmittel zusammenwirkenden Hydrophobierungskatalysators aktiviert.

Die WO 2015/014813 beschreibt ein Ausführungsbeispiel zur Herstellung eines Granulats, das dadurch gekennzeichnet sind, dass das gebildete und gealterte Gel mechanisch zerkleinert, dann in einen geschlossenen Druckbehälter transferiert und mittels HCl in Gegenwart von HMDSO hydrophobiert, und anschliessend auf einem Förderband bei 50 °C zuerst vorgetrocknet und danach bei 150 °C fertig getrocknet wird.

In einem weiteren Beispiel wird eine Aerogel-Dämmstoffplatte hergestellt, indem eine alkoholische Lösung mit einem Polyethoxydisiloxan Sol mit 22% SiO2 Gehalt und HMDSO mit einem mit 10% HCl dotierten Slow-Release Agens versetzt wird. Nach Zugabe einer Ammoniaklösung wird das durchmischte Sol in eine Passform gegeben, die zuvor mit einer Polyestervlies-Fasermatte ausgelegt wurde. Nach einer 5-stündigen Alterung wird die Gelplatte aus der Passform gehoben und in einem geschlossenen Gefäss während 24h bei 65°C gelagert und hydrophobiert. Bei dieser Temperatur tritt HCl aus der Mikroverkapselung aus und aktiviert das anwesende HMDSO. Das Gefäss wird dann geöffnet und die Gelplatte zunächst bei 50°C und dann bei 130 °C getrocknet.

WO 94/08681 A1 offenbart einen Behälter zur Anordnung in einem Bereich einer Destillationssäule, wobei der Behälter mehrere Träger umfasst. Die Träger sind derart konstruiert und angeordnet, dass sie den Flüssigkeitsfluß von den Behältern oder Fluide, die auf andere Weise in dem Bereich fließen, nicht wesentlich stören. Der Behälter des Dokuments umfasst Leitungen, die nicht mit den Behältern verbunden sind.

Die WO 2013/05395 offenbart einen Behälter, der der Aufnahme von festen Katalysatorpartikeln dient und in einem Bereich einer Destillationssäule angeordnet wird. Der Behälter hat eine perforierte Bodenplatte, die mit der peripheren Seitenwand verbunden ist, um die festen Katalysatorpartikel im inneren Raum des Behälters aufzunehmen und den Durchgang von Flüssigkeit durch den Boden des Behälters zuzulassen. Im Weiteren besitzt der Behälter eine Behälterabdeckung zum Akkumulieren von Flüssigkeit, wobei die Behälterabdeckung mit der peripheren Seitenwand verbunden ist und den inneren Raum abdeckt. Die Behälterabdeckung weist eine perforierte Platte auf, um den Durchtritt von Flüssigkeit von der Behälterabdeckung zur katalytischen Reaktionszone zuzulassen.

US Patent Nr. 5,679,312 offenbart eine reaktives Strippvorrichtung zur kontinuierlichen Durchführung chemischer Reaktionen unter Abtrennen der Reaktanten von mindestens einem der Reaktionsprodukte in einer Reaktorsäule mit einer Vielzahl von darin vorgesehenen perforierten Plattenböden, die mit einer Vielzahl von Rückflussrohren verbunden sind. Ein Teil jedes Rückflussrohres, ein Teil der Seitenwand der Reaktorsäule und einer der perforierten Plattenböden bilden zusammen eine Kammer. Einlässe im oberen Teil und entlang der Seitenwand der Reaktorsäule oberhalb des untersten Plattenbodens dienen der Zuführung von flüssigen Reaktanten. Ein Einlass und ein Auslass, die im unteren Teil der Reaktorsäule vorgesehen sind, dienen dem Einführen eines Inertgasstroms bzw. zum Abführen des Reaktionsgemisches. Am oberen Teil der Reaktorsäule ist ein Auslass vorgesehen zum Abführen des Inertgasstroms mit mindestens einem niedriger siedenden Reaktionsprodukt aus dem Reaktionsgemisch.

Die amerikanische Patentanmeldung Nr. 2006/260927 offenbart eine Vorrichtung und ein Verfahren zur kontinuierlichen katalytischen Reaktivdestillation und zur On-line-Regeneration eines festen Trägerkatalysators unter Verwendung einer katalytischen Reaktivdestillationsvorrichtung. Diese weist eine Destillationskolonne auf, die durch eine Trennwand in einen ersten und einen zweiten funktionellen Teil geteilt ist. An den unteren ersten Teil ist ein Verdampfer über eine Vorlauf- und eine Rücklaufleitung angeschlossen, um das Einsatzprodukt zur Verdampfung zu erwärmen. Das Verdampfen kann jedoch auch durch Frischdampfeinspritzung erfolgen oder es kann eine zumindest teilweise verdampfte Beschickung erfolgen. Im Weiteren ist im ersten Teil eine Dampf/Flüssigkeits-Kontaktiereinrichtung vorgesehen. Je nach Anwendung können auch noch eine Produktzufuhröffnung und eine Produktauslassöffnung im ersten Teil vorgesehen sein. Der zweite funktionelle Teil der Destillationskolonne ist über eine Dampfleitung an einen externen Kondensator angeschlossen, um Dampf zu entfernen, wobei das Kondensat jedoch über eine Leitung zurück in den zweiten Teil der Destillationskolonne geführt wird. Wie der erste Teil kann auch der zweite Teil eine Dampf/Flüssigkeits-Kontaktiereinrichtung aufweisen. Im Weiteren sind mit dem funktionellen zweiten Teil mindestens ein Dampfanschluss und mindestens ein Flüssigkeitsanschluss verbunden.

Verbunden mit dem wenigstens einen Dampfanschluss und dem wenigstens einen Flüssigkeitsanschluss des ersten funktionellen Teils ist ein ein katalytischer Destillationsreaktor. Der mindestens eine katalytische Destillationsreaktor ist mit einem festen Trägerkatalysator gefüllt. Auch mit dem mindestens einen katalytischen Destillationsreaktor verbunden sind die mindestens eine Dampfverbindung und die mindestens eine Flüssigkeitsverbindung des funktionellen zweiten Teils der Destillationskolonne. Ein Katalysatorregenerator, der über entsprechende Leitungen mit dem katalytischen Destillationsreaktor verbunden ist, dient dazu, verbrauchten Katalysator zu regenerieren.

Die EP-A-1 690 849 beschreibt ein Verfahren und eine Vorrichtung zur Herstellung von Carbonsäureestern mit einer Reaktivdestillation. Die Anlage umfasst eine erste Destillationskolonne, der ein Vorreaktor vorgeschaltet und eine zweite Kolonne nachgeschaltet ist. Im Vorreaktor wird eine erste Stufe der Veresterung ohne Stofftrennung durchgeführt. Ein Eingang des Vorreaktors ist durch Rückführleitungen mit der ersten Kolonne und/oder zweiten Kolonne verbunden, nämlich durch eine Rückführleitung für die organische Phase des ersten Kopfprodukts bzw. durch eine Rückführleitung für Destillat des zweiten Kopfprodukts.

### Aufgabe der Erfindung

Es ist Aufgabe der vorliegenden Erfindung, eine Anlage und ein Verfahren zur Herstellung eines Aerogel-Faser-Verbundwerkstoffes vorzuschlagen, die eine möglichst kostengünstige Herstellung des Verbundwerkstoffes im industriellen Massstabe erlauben. Insbesondere soll die Zeit, die für die Herstellung der Aerogel-Verbundplatten, so kurz wie möglich sein. Auch soll das Handling möglichst einfach und der Mitteleinsatz in Form von Reagenzien und Lösungsmittel so gering wie nur möglich sein Das Aerogelmaterial (ohne Fasermatrix) soll eine Porosität von > 80%, vorzugsweise > 90% und besonders bevorzugt >92%, und eine Dichte < 0,2 g/ml und vorzugsweise 0,15 g/ml und besonders bevorzugt < 0.12 g/ml aufweisen. Ein weiteres Ziel ist es, ein Aerogel-Verbundwerkstoff bereitzustellen, welcher auch säureempfindliche Fasern, wie beispielsweise Steinwollefasern, enthalten kann. Ziel ist es, einen Faser-Aerogel-Verbundwerkstoff mit einer Wärmeleitfähigkeit λ < 20 mW/mK und vorzugsweise < 16 mW/mK zur Verfügung zu stellen, der in einem industriellen Massstab hergestellt werden kann.

### Beschreibung

Die Erfindung betrifft ein Verfahren zur Herstellung eines Aerogels, gemäss Anspruch 1, bei welchem zuerst ein silikatisches Sol hergestellt, indem eine Organosilanverbindung, z.B. Tetraethoxysilan (TEOS), unter sauren oder basischen Bedingungen hydrolysiert wird, anschliessend ein Gel erzeugt wird, indem eine Base zum Sol gegeben wird, und das entstandene Gel sodann gealtert wird. Nach dem Altern erfolgt die Hydrophobierung des Gels mit einem Silylierungsmittel in Gegenwart einer Säure als Katalysator, und danach das Trocknen des Gels vorzugsweise durch unterkritisches Trocknen.

Im Rahmen der vorliegenden Erfindung soll unter Aerogele hochporöse Festkörper, insbesondere solche auf Silikatbasis, unabhängig von der Trocknungsmethode verstanden werden. In diesem Sinne werden vorliegend auch Xerogele und Lyogele unter den Begriff "Aerogel" subsumiert, wobei die nach dem erfindungsgemässen Verfahren hergestellten porösen Gele korrekterweise als Xerogele bezeichnet werden müssten.

Erfindungsgemäss wird die Aufgabe durch eine Anlage gemäss Oberbegriff von Anspruch 1 gelöst, die dadurch gekennzeichnet ist, dass:
h) der Reaktionsbehälter mit einem Deckel ausgestattet ist,
i) im Reaktionsbehälter vorzugsweise ein herausnehmbarer Tragkorb für die Aufnahme der Mehrzahl von Fasermatten vorgesehen ist, und
j) dass eine Mehrzahl von Platten vorgesehen sind, um die Fasermatten voneinander zu beabstanden.

Die erfindungsgemässe Anlage hat den Vorteil, dass sie für die industrielle Produktion von Aerogel-Fasermatten geeignet ist und die wesentlichen Reaktionsschritte in ein und demselben Reaktor durchgeführt werden können. Im Reaktionsbehälter kann gleichzeitig eine Mehrzahl von Fasermatten angeordnet sein. Diese sind im Herstellungsprozess durch Platten voneinander beabstandet. Nach der Gelierung und Hydrophobierung werden die Platten entfernt, sodass zwischen den Aerogel-Dämmplatten Hohlräume gebildet sind, durch die heisse Luft geblasen werden kann. Vorteilhaft ist am Reaktionsbehälter eine Wärmetauschervorrichtung vorgesehen, um den Reaktor bezw. den Reaktorinhalt auf eine bestimmte Temperatur zu erwärmen oder abzukühlen. Dies hat den Vorteil, dass der Reaktorinhalt rasch auf eine bestimmte Temperatur erwärmt werden kann.

Gemäss einer vorteilhaften Ausführungsform ist am Reaktionsbehälter ein Anschluss zum Einblasen eines Trocknungsgases vorgesehen ist, an dem eine Zuleitung für das Trocknungsgas angeschlossen ist und die mit einer Heizeinrichtung in Verbindung steht. Am Reaktionsbehälter ist ausserdem eine Ableitung für das Trocknungsgas vorgesehen, die mit einem Wärmetauscher in Verbindung steht. Ein Gebläse oder eine Pumpe kann vorgesehen sein, um das Trocknungsgas in den Reaktionsbehälter zu blasen oder anzusaugen.

Vorteilhaft steht der Wärmetauscher über eine Rückführleitung mit Reaktor in Verbindung. Das heisst, dass das Trocknungsgas vorzugsweise im Kreis geführt wird, wobei mit dem heissen Trocknungsgas ausgetriebene, flüchtige Stoffe (Lösungs- und Reaktionsmittel) zweckmässigerweise auskondensiert werden. Nach der Kondensation wird das Trocknungsgas wieder auf die gewünschte Temperatur aufgeheizt und dem Reaktor wieder zugeführt.

Um das Handling zu erleichtern, ist im Reaktionsbehälter vorzugsweise ein herausnehmbarerTragkorb vorgesehen, in welchem die Fasermatten für die Herstellung der Kompositplatten angeordnet werden. Die Verwendung von Tragkörben hat den Vorteil, dass ein zweiter Tragkorb mit Fasermatten beladen und vorbereitet werden kann, während dem sich der erste Tragkorb noch im Reaktionsbehälter befindet. Diese Art der Trocknung hat sich als besonders vorteilhaft herausgestellt, da auf eine Vortrocknung, wie sie im bekannten Stand der Technik als erforderlich angesehen wird, verzichtet werden kann. Denkbar ist auch, dass die Trocknung bei Unterdruck stattfindet.

Um die nötige Herstellungszeit für die Aerogel-Dämmplatten weiter zu verringern, ist vorzugsweise ein mit einem Rührwerk ausgestatteter Mixer/Settler vorgesehen ist, der über eine Leitung einerseits mit dem Reaktionsbehälter und andererseits über eine andere Leitung mit dem Vorratsbehälter für das Lösungsmittel in Verbindung steht. Durch das Vorhandensein des Mixer/Settler kann im Reaktionsbehälter bereits der nächste Produktionsschritt ablaufen, wenn der Inhalt des Mixer/Settler zeitgleich aufgearbeitet wird. Das gereinigte Lösungsmittel oder Reagenz kann sodann in einem nächsten Produktionsschritt wieder eingesetzt werden.

Vorteilhaft steht der Mixer/Settler über eine Leitung mit einer Destillationsvorrichtung in Verbindung, sodass der Inhalt des Mixer/Settler nachfolgend via Destillation aufgearbeitet werden kann. Gereinigtes Lösungsmittel kann so wieder in den Vorratsbehälter des selbigen zurückgeführt werden.

Vorzugsweise steht der Mixer/Settler über eine weitere Leitung mit dem Vorratsbehälter für das Hydrophobierungsmittel in Verbindung. Damit kann das nicht verbrauchte Hydrophobierungsmittel in einem nächsten Batch-Prozess wiederverwendet werden.

Gegenstand der vorliegenden Erfindung ist auch eine Anlage gemäss Oberbegriff von Anspruch 9, die dadurch gekennzeichnet ist, dass der Reaktionsbehälter über Rückführungsleitungen direkt oder indirekt einerseits mit dem Vorratsbehälter für das Lösungsmittel und dem Vorratsbehälter für das Hydrophobierungsmittel in Verbindung steht. Diese Anlage hat den Vorteil, dass sie die rationelle, industrielle Produktion von monolithischen Aerogel-Dämmplatten erlaubt. Dadurch, dass der Verbrauch von Lösungsmitteln und Reagenzien minimiert ist, können die Kosten des Herstellprozesses gering gehalten werden.

Ein weiterer Gegenstand der vorliegenden Erfindung ist ein Verfahren zur Herstellung einer faserverstärkten Aerogelplatte gemäss Oberbegriff von Anspruch 11, das dadurch gekennzeichnet ist, dass zu Beginn eine Mehrzahl von Fasermatten und eine entsprechende Zahl von Zwischenplatten alternierend in einem Reaktionsbehälter angeordnet werden, sodass zwei Fasermatten durch jeweils eine Zwischenplatte voneinander getrennt resp. beabstandet sind, dass das silikatische Sol in den Reaktionsbehälter gegeben und die Gelierung gestartet, optional das Gel gealtert wird, und dass nach der Gelierung und dem optionalen Altern des Gels die Reaktionslösung abgelassen, die Zwischenplatten entfernt und die faserverstärkten Aerogelplatten bei Temperaturen > 100 °C getrocknet werden.

Das erfindungsgemässe Verfahren hat den für einen industriellen Prozess wesentlichen Vorteil, dass eine grössere Zahl von Aerogel-Faserplatten auf einmal hergestellt und die Aerogel-Fasermatten im Reaktionsbehälter getrocknet werden können.

Vorteilhaft werden benachbarte Fasermatten wenigstens 10 mm, vorzugsweise wenigstens 20 mm, und besonders bevorzugt wenigsten 30 mm beabstandet voneinander angeordnet. Dies hat den Vorteil, dass Zwischenräume für das Durchblasen eines heissen Luftstromes vorhanden und die Aerogel-Dämmplatten insitu getrocknet werden können. Dadurch ist kein zusätzlicher Handling-Schritt nötig.

Zweckmässigerweise werden die Fasermatten in einem Tragkorb angeordnet, der in den Reaktionsbehälter passt. Dabei soll zwischen dem Tragkorb und der Reaktorinnenwand möglichst wenig Totraum verbleiben. Der Tragkorb soll den Behälterinnenraum möglichst vollständig ausfüllen, sodass keine unnötigen Toträume vorhanden sind. Damit kann mit einer minimalen Menge an Lösungsmittel und Reagenzien eine grössere Anzahl von Aerogel-Faserplatten hergestellt werden.

Gemäss einer besonders bevorzugten Verfahrensvariante erfolgt die Trocknung der faserverstärkten Aerogelplatten direkt im Reaktionsbehälter. Dies hat den Vorteil, dass kein zusätzliches Handling der Aerogel-Dämmplatten notwendig ist. Vorteilhaft geschieht die Trocknung durch Durchblasen von heisser Luft durch den Reaktionsbehälter. Dies ist eine effiziente Methode, insbesondere wenn die Trocknung bei Temperaturen > 120 °C, vorzugsweise > 130 °C und besonders bevorzugt bei Temperaturen zwischen 140 °C und 160°C erfolgt. Im Gegensatz zum Stand der Technik kann auf eine Vortrocknung verzichtet werden, was die Herstellungszeit einer Charge Aerogel-Dämmplatten stark verkürzt. Zum Trocknen der faserverstärkten Aerogelplatten wird das heisse Trocknungsgas während mindestens fünf, vorzugsweise während mindestens zehn und besonders bevorzugt während mindestens 15 Stunden durch den Reaktor geleitet. Während sich das Trocknungsgas zu Beginn des Trocknungsprozesses im Reaktor noch stark abkühlt, ist der Reaktor und dessen Inhalt nach drei bis fünf Stunden auf die Temperatur des heissen Trocknungsgases aufgewärmt. Vorteilhaft wird das Trocknungsgas im Kreis geführt und im heissen Trocknungsgas aufgenommene flüchtige Stoffe kontinuierlich auskondensiert, sodass das neu zugeführte Trocknungsgas wieder Lösungsmittel und flüchtige Reaktionsmittel aufnehmen kann.

Vorzugsweise werden die Gelierung, Hydrophobierung und Trocknung (Schritte b, c und d) in ein und demselben Reaktor durchgeführt. Dies ist besonders effizient, da auf zeitintensive Transportschritte zwischen den einzelnen Verfahrensschritten verzichtet werden kann. Auch kann wertvoller Platz eingespart werden, wenn alle Verfahrensschritte in ein und demselben Behälter gemacht werden können.

Vorteilhaft wird die Hydrophobierung in Gegenwart von Salpetersäure durchgeführt. Salpetersäure hat den Vorteil, dass diese überraschenderweise auch mit Steinwollefasern kompatibel ist, was nicht vorhersehbar war. Als bevorzugtes Hydrophobierungsmittel wird Hexamethyldisiloxan (HMDSO) verwendet.

Obwohl wegen des abschliessenden Trocknungsschritt im Allgemeinen versucht wurde, den Wassergehalt so tief wie möglich zu halten, hat sich zur Überraschung der Erfinder herausgestellt, dass ein Anteil von Wasser (v/v) von mindestens 4% und vorzugsweise von mindestens 7% besonders vorteilhaft ist. Obwohl Wasser bei der Hydrophobierungsreaktion nicht direkt beteiligt ist, ist die Qualität der hergestellten Aerogel-Dämmplatten besser, wenn Wasser präsent ist. Überraschenderweise gelingt die Hydrophobierung auch noch, wenn der gewichtsmässige Anteil des Hydrophobierungsmittels mindestens 50% beträgt.

Vorteilhaft wird der pH bei der Hydrophobierung auf einen Wert zwischen 1 und 7, vorzugsweise zwischen 1 und 5 eingestellt und besonders bevorzugt zwischen 1 und 3. Im sauren Bereich bei ca. pH 2 reagiert HMDSO rasch mit den noch freien Si-OH-Gruppen.

Vorteilhaft wird für die einzelnen Verfahrensschritte des Herstellungsprozesses Ethanol verwendet. Ethanol ist kostengünstig beschaffbar und lässt sich gut aus dem Aerogel austreiben.

Vorteilhaft wird das silikatische Sol durch Hydrolyse von Alkoxysilanen oder Hvdroxyalkoxysilanen, vorzugsweise aus Tetraethoxysilan (TEOS) oder Trimethylchlorsilan, hergestellt. Die Verwendung von TEOS hat den Vorteil, dass dieses in Alkohol, z.B. EtOH, lösbar ist. Entsprechend kann die Herstellung des Sols in Alkohol, einem alkoholischen oder einem alkoholhaltigen Lösungsmittelgemisch durchgeführt werden, was für den Prozess von Vorteil ist, da weniger Wasser in den Poren des später gebildeten Gels vorliegt. Unter einem alkoholischen Lösungsmittelgemisch soll ein Gemisch verstanden werden, in dem Alkohol der Hauptbestandteil ist und vorzugsweise einen Volumenanteil von >90 Vol-% und besonders bevorzugt >95 Vol-% aufweist. Demgegenüber soll unter einem alkoholhaltigen Lösungsmittelgemisch ein solches verstanden werden, in dem der prozentuale Volumenanteil des oder der Alkohole < 50 Vol-% und vorzugsweise < 40 Vol-% ist.

Gemäss einer besonders vorteilhaften Verfahrensvariante wird ein vorhydrolysiertes Sol eingesetzt. Dadurch lässt sich der Prozess der Gelherstellung wesentlich verkürzen. Vorhydrolisierte Sole sind stabil und lagerfähig, und sind kommerziell erhältlich. Sie können auch in einem parallelen Herstellprozess laufend hergestellt werden.

Vorzugsweise werden vorhydrolysierte Sole eingesetzt, die in einer Menge zwischen 5% und 30 % (m/m) SiO₂ und vorzugsweise zwischen 10% und 25% (m/m) SiO2 und besonders bevorzugt zwischen 15% und 20% (m/m) SiO2 in Alkohol, vorzugsweise EtOH, vorliegen.

Die Herstellung des Sol kann durch Hydrolyse von Tetraethoxysilan (TEOS) erfolgen, das in einem Lösungsmittel, vorzugsweise EtOH, vorgelegt wird. Zweckmässigerweise erfolgt die Gelierung in einem Temperaturintervall zwischen 30°C und 80°C, vorzugsweise zwischen 50°C und 75°C, und besonders bevorzugt zwischen 60°C und 70°C.

Vorteilhaft wird die Hydrolyse, Gelierung und die Hydrophobierung in einem im Wesentlichen alkoholischen Lösungsmittel, vorzugsweise EtOH, durchgeführt, wobei zweckmässigerweise der Wasseranteil kleiner als 20 Vol.%, vorzugsweise kleiner als 10 Vol.% und besonders bevorzugt kleiner 5 Vol.% ist. Es wurde festgestellt, dass ein geringer Wasseranteil einen positiven Einfluss auf die Qualität und die Partikelgrösse des hergestellten Aerogels hat.

Durch Optimierung der einzelnen Verfahrensschritte ist es überraschenderweise möglich, die Hydrophobierung ohne vorherigen Lösungsmittelaustausch durchzuführen. Dies hat den grossen Vorteil, dass einerseits das Verfahren rascher abläuft und andererseits geringere Lösungsmittelmengen verbraucht werden. Grundsätzlich denkbar ist, das Silylierungsmittel bereits bei Verfahrensschritt a) zuzugeben. Dies ist dann möglich, wenn ein beispielsweise im Alkalischen stabiles Silylierungsmittel eingesetzt wird und die Solherstellung und Gelierung im Alkalischen erfolgt. Ein geeignetes, im Alkalischen stabiles Silylierungsmittel ist beispielsweise HMDSO.

Ein weiterer Gegenstand ist ein Aerogel-Faser-Verbundwerkstoff erhältlich dadurch, dass das gemäss dem beschriebenen Verfahren hergestellte Sol mit Steinwollefasern gemischt wird. Der Aerogel-Faser-Verbundwerkstoff hat eine Porosität von > 90% und eine Wärmeleitfähigkeit < 18 mW/mK. Überraschenderweise werden die Mineralfasern während der Herstellung nicht merklich angelöst, was aufgrund der bekannten Säureempfindlichkeit der Steinwollefasern nicht erwartet werden konnte.

Obwohl grundsätzlich auch Glaswollefasern für die Herstellung des Verbundwerkstoffes eingesetzt werden können, werden vorzugsweise Steinwollefasern verwendet. Steinwollefasern haben gegenüber Glaswollefasern den Vorteil, dass deren Feuerbeständigkeit wesentlich besser ist.

Die Erfindung wird nachfolgend anhand der nachfolgenden Ausführungsbeispiele näher erläutert. Es zeigt
- Fig. 1: Schematisch eine industrielle Anlage mit einem Reaktionsbehälter, diversen Vorratsbehältern für die Aufnahme der nötigen Agenzien und Lösungsmittel für die Herstellung von faserverstärkten Aerogelplatten;
- Fig. 2: ein Ausführungsbeispiel eines Reaktionsbehälters bestehend aus einer vorzugsweise doppelwandigen Wanne, einem Deckel zum Verschliessen der Wanne; und mehreren im Behälter aufgenommenen Tragkörben für die gleichzeitige Aufnahme und den Transport einer Mehrzahl von Fasermatten;
- Fig. 3: Einen einzelnen, leeren Tragkorb gemäss Fig. 2;
- Fig. 4: Einen mit einer Mehrzahl von Fasermatten und Zwischenplatten beladenen Tragkorb;
- Fig. 5: die Innenwanne des Reaktobehälters von Fig. 2; und
- Fig. 6: Die äussere Schale der Wanne von Fig. 2.

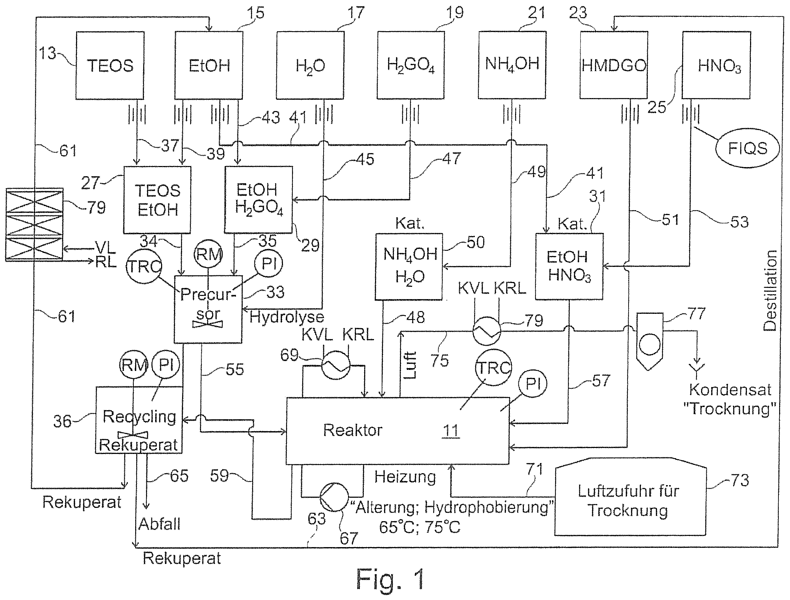

Figur 1 zeigt schematisch eine industrielle Anlage zur Herstellung von Aerogelplatten mit einem Reaktionsbehälter 11, diversen Vorratsbehältern 13, 15, 17, 19, 21, 23 und 25 für die Aufnahme der Reaktions- und Lösungsmittel für die Durchführung der Reaktion, sowie mit Behältern 27, 29 und 31 für die Herstellung der Reaktionsgemische und Zwischenlagerung der teilweise verbrauchten Reaktionslösungen. Die Vorrats-, Reaktions- und Mischbehälter sind über Leitungen 37 bis 63 untereinander verbunden, sodass die nötigen Reaktionsmischungen hergestellt werden können. Konkret werden folgende Behälter und Leitungen unterschieden:
Reaktionsbehälter 11,
Vorratsbehälter 13 für eine Organosilanverbindung (TEOS)
Vorratsbehälter 15 für Lösungsmittel (EtOH)
Vorratsbehälter 17 für Wasser
Vorratsbehälter 19 für Schwefelsäure (H2SO4)
Vorratsbehälter 21 für wässerige Ammoniaklösung (NH4OH),
Vorratsbehälter 23 für Hydrophobierungsmittel (HMDSO),
Vorratsbehälter 25 für Salpetersäure (HNO3),
Mischbehälter 27 zur Herstellung einer alkoholischen TEOS-Lösung,
Mischbehälter 29 zur Herstellung einer verdünnten Mischung aus EtOH und H2SO4,
Mischbehälter 31 zur Herstellung einer verdünnten Ammoniaklösung,
Reaktionsbehälter 33 zur Herstellung eines Sols,
Verbindungsleitung 34 zwischen dem Reaktionsbehälter 33 und dem Mischbehälter 27
Verbindungsleitung 35 zwischen dem Reaktionsbehälter 33 und dem Mischbehälter 29
Behälter 36 für die Zwischenlagerung des teilweise verbrauchten Reaktionsgemisches,
Leitung 37 zur Verbindung von Vorratsbehälter 13 mit Mischbehälter 27,
Leitung 39 zur Verbindung von Vorratsbehälter 15 mit Mischbehälter 27,
Leitung 41 zur Verbindung von Vorratsbehälter 15 mit Mischbehälter 31,
Leitung 43 zur Verbindung von Vorratsbehälter 15 mit Mischbehälter 29,
Leitung 45 zur Verbindung von Vorratsbehälter 17 mit Reaktionsbehälter 33,
Leitung 47 zur Verbindung von Vorratsbehälter 19 mit Mischbehälter 29,
Leitung 49 zur Verbindung von Vorratsbehälter 21 mit dem Reaktor 11,
Leitung 51 zur Verbindung von Vorratsbehälter 23 mit dem Reaktor 11,
Leitung 53 zur Verbindung von Vorratsbehälter 25 mit Mischbehälter 31,
Leitung 55 zur Verbindung von Reaktionsbehälter 33 mit dem Reaktor 11,
Leitung 57 zur Verbindung von Mischbehälter 31 mit dem Reaktor 11,
Leitung 59 zur Verbindung des Reaktors 11 mit dem Zwischenbehälter 35,
Leitung 61 zur Verbindung des Zwischenbehälters 35 mit dem Vorratsbehälter 15,
Leitung 63 zur Verbindung des Zwischenbehälters 35 mit dem Vorratsbehälter 23,
Ableitung 65 für Rückstände,
Pumpe 67,
Erster Wärmetauscher 69
Zuleitung 71 für ein Trocknungsgas,
Heizquelle 73 in der Zuleitung 71,
Ableitung 75 für das Trocknungsgas
Pumpe 77
Wärmetauscher 79

Kern der schematisch dargestellten Produktionsanlage gemäss Figur 1 ist der Reaktionsbehälter 11. Dieser kann mittels des Heiz-/Kühlkreislaufes 67,68,69 auf eine bestimmte Temperatur, üblicherweise 60 bis 80 °C erwärmt und auf dieser Temperatur gehalten werden. In den Reaktionsbehälter führt eine Zuleitung 71, durch die ein Trocknungsgas, vorzugsweise Luft, in den Reaktionsbehälter 11 geblasen werden kann. In der Zuleitung 71 ist eine Heizquelle 73 integriert, die es erlaubt, das Gas resp. die Luft auf eine Temperatur von bis zu ungefähr 200 °C, vorzugsweise ungefähr ca. 150 °C zu erwärmen. Zur Ableitung der Luft ist eine Ableitung 75 vorgesehen. Diese steht in Verbindung mit einer Pumpe 77 zum Ansaugen des Trocknungsgases. In der Ableitung 75 ist ein Wärmetauscher 79 vorgesehen, mit Hilfe dessen ein Grossteil des im Trocknungsgas mitgeführten Lösungsmittels kondensiert wird. Der Rest, des im Trocknungsgas enthaltenen Lösungsmittel wird in der Pumpe 77, vorzugsweisen einem Zyklonabscheider, abgeschieden. Anschliessend kann das getrocknete Trocknungsgas wieder in die Zuleitung 71 zurückgeführt werden.

Der Reaktionsbehälter 11 steht über die Verbindungsleitung 55 mit dem Reaktionstank 33 in Verbindung. Der Reaktionstank 33 dient der Herstellung eines Sols und steht wiederum über die Verbindungsleitungen 34,35 einerseits mit dem Mischbehälter 27 und andererseits mit dem Mischbehälter 29 in Verbindung. In den Mischbehälter 27 führt einerseits die Verbindungsleitung 37, die mit dem TEOS - Vorratsbehälter 13 in Verbindung stellt, und andererseits die Verbindungsleitung 39, die mit dem Lösungsmittel - Vorratsbehälter 15 in Verbindung steht. Der Mischbehälter 29 steht einerseits über die Verbindungsleitung 43 ebenfalls mit dem Lösungsmittel-Vorratsbehälter 17 und andererseits die Verbindungsleitung 47 mit dem Schwefelsäure-Vorratsbehälter 19 in Verbindung. Über diese Anordnung von Behältern und Verbindungsleitungen kann ein Sol vorbereitet und in den Reaktionsbehälter 11 transferiert werden.

Der Reaktionsbehälter 11 steht ausserdem über die Verbindungsleitung 57 mit dem Mischbehälter 31 in Verbindung. Der Mischbehälter 31 dient der Herstellung einer verdünnten, alkoholischen Salpetersäurelösung und ist für diesen Zweck über die Verbindungsleitungen 41,53 einerseits an den Lösungsmittel-Vorratsbehälter 15 und andererseits an den Salpetersäure-Vorratsbehälter 25 angeschlossen. Mit der Salpetersäurelösung wird im Herstellungsprozess das vorhandene Gel für die anschliessende Hydrophobierung mit HMDSO sauer gestellt.

Die Zufuhr von HMDSO in den Reaktionsbehälter 11 erfolgt über die Verbindungsleitung 51, die den Behälter 11 mit dem HMDSO-Vorratsbehälter 23 verbindet.

Zu guter Letzt steht der Reaktionsbehälter 11 über die Verbindungsleitung 49 noch mit dem Ammoniak-Vorratsbehälter 21 in Verbindung. Die Ammoniak-Lösung wird im Herstellungsprozess benötigt, um die Gelierung einzuleiten. Optional kann ein Tank 50 vorgesehen sein, um eine verdünnte Ammoniaklösung vorzubereiten.

Die im Reaktionsbehälter 11 vorhandenen Reaktionslösungen können über die Leitung 59 in den Behälter 36 abgelassen werden, der als Settler und zur Zwischenlagerung dient. Je nach Prozessschritt wird der Inhalt des Behälters 36 entweder über die Leitung 63 in den HMDSO-Behälter oder über die Leitung 61 in den Lösungsmittel-Vorratsbehälter 15 geleitet. Über die Leitung 65 kann der Inhalt auch der Entsorgung zugeführt werden. Zur Aufarbeitung des Lösungsmittels ist in der Verbindungsleitung 61 eine Destillationskolonne 79 vorgesehen, mit Hilfe derer das zur Hauptsache eingesetzte Lösungsmittel von anderen Reaktionsbestandteilen abgetrennt werden kann.

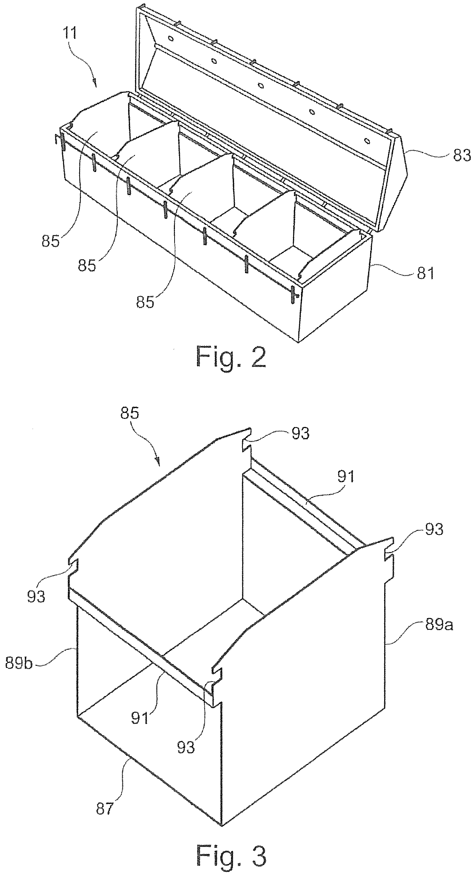

Das in den Figuren 2 bis 6 gezeigte Ausführungsbeispiel eines Reaktionsbehälters 11 dient der Aufnahme einer Mehrzahl von Faserplatten und ist für die industrielle Produktion von Aerogel-Kompositwärmedämmplatten ausgelegt. Der Reaktionsbehälter 11 umfasst eine Wanne 81, einen Deckel 83 zum Verschliessen des Behälters und mehrere in der Wanne 81 anordenbare Tragkörbe 85. Der Reaktionsbehälter 11 ist in diesem Ausführungsbeispiel daher bevorzugt eine Wanne 81.

Ein einzelner Tragkorb 85 ist in der Figur 3 gezeigt. Er besteht aus einer rechteckförmigen Plattform 87, an die sich an zwei einander gegenüberliegenden Seiten Wände 89a, 89b anschliessen. Die Wände 89a, 89b sind oben mit Streben 91 miteinander verbunden, um dem Tragkorb 85 die nötige Stabilität zu verleihen. Am oberen Ende oberhalb der beiden Streben sind in den Wänden 89a, 89b Ösen 93 ausgebildet, mit Hilfe derer die Tragkörbe 85 von einem Kran angehoben werden können.

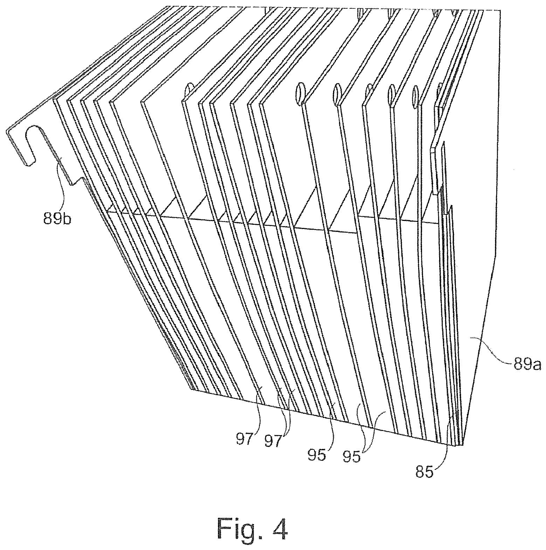

Figur 4 zeigt einen beladenen Tragkorb 85. Zwischen den Wänden 89a, 89b sind alternierend Fasermatten 95 und Zwischenplatten 97 angeordnet, d.h. zwischen zwei benachbarten Fasermatten 93 ist jeweils eine Zwischenplatte 95 vorgesehen. Nach dem Gelier- und Hydrophobierprozess und dem Entfernen der Zwischenplatte ist dadurch zwischen den Fasermatten 95 ein Zwischenraum gebildet. Durch diesen Zwischenraum kann zwecks Trocknung der Aerogelplatten heisses Trocknungsgas, vorzugsweise Luft, hindurchgeführt würden. Dies ermöglicht es, die Aerogelplatten direkt im Reaktionsbehälter 11 zu trocknen.

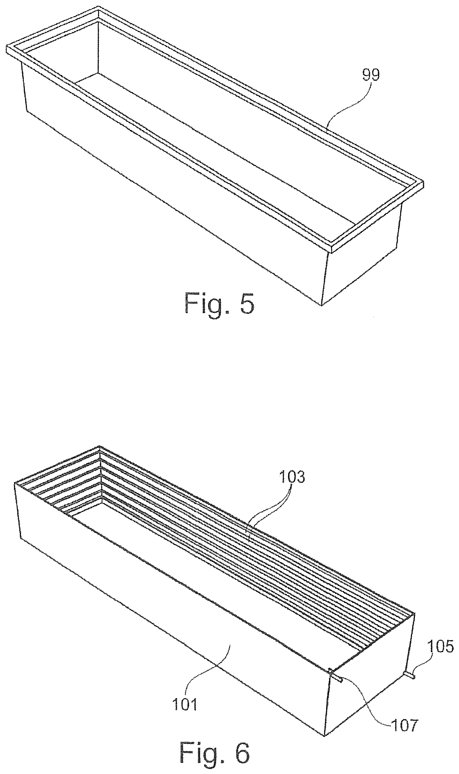

Die Wanne 81 ist vorzugsweise gemäss den Figuren 5 und 6 doppelwandig ausgebildet und besteht aus einer Innenwanne 99 und einer Aussenschale 101. An der Innenseite der Aussenschale sind umlaufende Leitbleche 103 vorgesehen, die bei eingesetzter Innenwanne 99 einen spiralförmigen Kanal bilden, der vom Einlass 105 bis zum Auslass 107 führt.

Damit Lösungsmittel und Luft möglichst ungehindert durch den Reaktionsbehälter strömen kann, weist die Plattform 87 des Tragkorbs 85 eine Vielzahl von Perforationen 109 auf. Denkbar ist, dass am Boden des Reaktionsbehälters ebenfalls Leitbleche oder Kanäle vorgesehen sind, um die Luft in die Zwischenräume zwischen den Faserdämmplatten zu leiten.

Der Herstellprozess einer faserverstärkten Composite-Wärmedämmplatte läuft wie folgt ab: Zuerst wird ein Sol ausgehend von einer organischen Organosilanverbindung hergestellt. Als Organosilanverbindung kommt vorzugsweise Tetraethoxysilan (kurz: TEOS) zum Einsatz, das in grösseren Mengen kostengünstig beschafft werden kann. Eine gewünschte Menge TEOS wird in den Mischbehälter 27 transferiert und mit einer bestimmten Menge Alkohol verdünnt, damit das TEOS in der gewünschten Konzentration vorliegt. Im Mischbehälter 29 wird Alkohol vorgelegt und eine bestimmte Menge Schwefelsäure gelöst. Die alkoholische TEOS-Lösung und die alkoholische Schwefelsäurelösung werden sodann in den Reaktionsbehälter 33 transferiert und mittels des Rührwerks heftig gerührt. Um die Hydrolyse des TEOS zu starten wird über die Leitung 45 eine kleine Menge Wasser zugeführt. Bei 40 oC bis 60 oC dauert es zwischen 1 und 6 Stunden, bis das TEOS hydrolisiert und das Sol gebildet ist. Das so hergestellte Sol wird sodann in den Reaktor 11 transferiert, in dem vorgängig eine Mehrzahl von Faserdämmplatten alternierend mit Zwischenplatten angeordnet wurde. Die Fasermatten und Zwischenplatten sind vorzugsweise im Tragkorb 91 angeordnet und können somit alle auf einmal in den Reaktor transferiert werden. In den Reaktor 11 wird dann eine solche Menge des Sols eingelassen, bis die Faserdämmplatten mit dem Sol bedeckt sind. Sodann wird die Reaktionsmischung auf ca. 50 °C bis 70 °C erwärmt und basisch gestellt, indem eine entsprechende Menge Ammoniaklösung zudosiert wird. Sobald die Reaktionsmischung basisch gestellt ist, setzt die Gelierung unmittelbar ein. Normalerweise läuft die Gelierung in 5 bis 15 Min ab. Danach wird das Gel bei der gleichen Temperatur während 72h gealtert. Nach dieser Zeit ist die Gelierung weitgehend abgeschlossen.

Danach wird das Lösungsmittelgemisch in den Behälter 35 abgelassen und anschliessend vorzugsweise durch Destillation gereinigt. Da das Gemisch vorwiegend aus Ethanol besteht, kann der überwiegende Teil des für die Gelbildung eingesetzten Ethanols wieder zurückgewonnen und in den Vorratsbehälter 15 zurückgeführt werden.

Nach dem Ablassen des Lösungsmittelgemisches wird der Reaktor 11 mit HMDSO aus dem Vorratsbehälter 23 gefüllt, bis die Faserdämmplatten mit der Lösung bedeckt sind. Danach wird in Ethanol gelöste Salpetersäure zum Gemisch gegeben und ein pH-Wert zwischen 1 und 3 eingestellt. Gleichzeitig wird die Temperatur des Reaktors auf ca. 60 °C bis 78 °C angehoben. Unter diesen Bedingungen reagieren die freien OH-Gruppen mit dem im mehrfachen Überschuss vorhandenen HMDSO und werden dadurch passiviert.

Die Hydrophobierung dauert je nach gewählter Temperatur zwischen ungefähr 1 und 5 Stunden (24h bei 75°C). Bei 75 °C dauert die Hydrophobierung zwischen 1 und 2 Stunden. Nachdem die Hydrophobierung abgeschlossen ist, wird das Reaktionsgemisch abgelassen und in den Behälter 35 transferiert. Danach wird das Reaktionsgemisch mit etwas Wasser versetzt und zwischen 10 und 24 h ruhen gelassen, bis sich eine untere Wasserphase und eine obere, organische Phase gebildet hat. Die Wasserphase, die Salze und nur teilweise umgesetztes HMDSO enthält, wird abgelassen und entsorgt. Der Rest, der überwiegend aus HMDSO besteht, wird sodann über die Leitung 63 in den Vorratsbehälter 23 zurückgeführt und für die Hydrophobierung eines nachfolgenden Ansatzes verwendet. Es hat sich gezeigt, dass die Hydrophobierung auch mit Lösungen zufriedenstellend ablaufen kann, in denen der gewichtsmässige Anteil von HMDSO lediglich noch 70% beträgt. Läuft die Hydrophobierungsreaktion nicht mehr zufriedenstellend ab, kann das Gemisch destilliert und praktisch reines HMDSO gewonnen werden. Gemäss den praktischen Versuchen werden bei einer Hydrophobierungsreaktion lediglich zwischen 3 % und 6% des eingesetzten HMDSO verbraucht. Das bedeutet, dass lediglich zwischen 3% und 6% des eingesetzten HMDSO wieder ersetzt werden muss, damit die ursprüngliche Menge HMDSO wieder hergestellt ist. Insgesamt ist der Herstellungsprozess stark prozessoptimiert, da nur wenige Abfallprodukte anfallen. Das bevorzugt eingesetzte Lösungsmittel EtOH kann grösstenteils wiederverwendet werden. Die Säuren HNO3 und H2SO4 werden nur in katalytischen Mengen gebraucht, und die übrigen organischen Reagenzien HMDSO und TEOS werden bei der Hydrolyse resp. der Hydrophobierung grösstenteils umgesetzt oder können in einer nachfolgenden Reaktion wieder verwendet werden.

### Precursor P75E20:

### Vorprodukt Herstellung Batch:

Bei Raumtemperatur (RT) TEOS 77.3L (72.7 kg) vorlegen, unter 600rpm Ethanol 16.6L (13.1 kg) hinzugeben (= MIX A)
16.6L (13.1 kg) Ethanol in kleinem Zulauftank vorlegen, H2SO4 95-98% m/m, 32.9 mL (60.5 gr) hinzugeben (= MIX B), Reaktion Exotherm (∼30-35°C)
MIX B zu MIX A in 1h @ RT @ 600 rpm hinzugeben
9.4 L (9.4kg) H2O in 2h @ RT @ 600rpm hinzugeben
Precursor abfüllen und lagern, Total Vorprodukt 119.93L

### Sol Herstellung:

47.1 L (42.9 kg) P75E20 oder Precursor oder Vorprodukt vorlegen, unter Rühren bei RT @ 600rpm 113.8L (89.8 kg) Ethanol zugeben, Rührung auf 900rpm erhöhen und Sol auf 45°C konditionieren.

### Sol akt. Gelierung:

Bei Tmax. Heizung abschalten und Basenlösung zugeben (Aktivierung, Initiator, pH Justieren fgl. vom H2SO4 (Precursor)
Basenlösung: 5.1 L H2O + 0.4 L NH4OH 28-30%m/m: Total 5.5 L Basenlösung (0.54 M)

### Herstellung des Aerogel-Faserverbundwerkstoffs

47.1 L eines vorhydrolysierten Sols (zu 75% vorhydrolisiert; 20% (m/m) SiO₂-Gehalt) in EtOH (abs.) wird mit etwas mehr als der doppelten Menge Ethanol (113.8 L) verdünnt und unter Rühren (900 rpm) homogenisiert. Gleichzeitig wird das Gemisch auf ungefähr 45 °C aufgeheizt. Sobald sich die Temperatur eingestellt hat und das Gemisch homogenisiert ist, wird eine wässerige NH₄OH-Lösung (0.4 L wässerige Base + 5.1 L H2O (ca. 5 L; 0,55 M) zum Sol gegeben, kurz homogenisiert und danach in den mit einem Temperaturfühler ausgestatteten Reaktor 11 transferiert, in welchem bereits eine Mehrzahl von Mineralfasermatten mit einem spezifischen Gewicht zwischen 40 Kg/m3 und 70 Kg/m3 eingebracht ist. Danach wird der Inhalt des Behälters auf ca. 65 °C erwärmt, und die Mischung zum Altern stehen gelassen. Die Alterung des Gels erfolgt zwischen 6 und 96 h, vorzugsweise zwischen 24 und 84 Stunden und besonders bevorzugt während ungefähr 48 - 72h. Nach der Gelierung wird das Lösungsmittel abgelassen, in den Behälter 35 transferiert und mittels Destillation aufgearbeitet.

Der Reaktor 11 wird sodann mit einer solchen Menge HMDSO gefüllt, sodass die Fasermatten bedeckt sind, und auf ca. 75 °C erwärmt. Gel im gleichen Behälter durch Zugabe eines Überschusses HMDSO (vorliegend von ca.70 L einer 60 % bis 98% (m/m) HMDSO (+HN03 in EtOH Lsg.) und ca. 5 L einer im Wesentlichen alkoholischen HNO3-Lösung (ca. 4 bis 9% m/m) während 24 h bei 75 °C dynamisch, d.h. durch Umwälzen der flüssigen Phase, hydrophobiert.

Nach dem Abkühlen wird die teilweise verbrauchte Hydrophobierlösung in den Mixer/Settler 35 transferiert, und mit etwas Wasser verdünnt (ca. 10% des vorhandenen Lösungsmittelvolumens). Durch Stehenlassen bilden sich dann 2 Phasen, eine wässerige, untere Phase, die entsorgt werden kann, und eine organische, obere Phase die das HMDOS enthält und in einem nächsten Ansatz wieder verwendet werden kann.

Sobald das teilweise verbrauchte HMDSO - Lösung abgelassen ist, werden die Zwischenplatten 97 entfernt und sogleich auf ca. 150 °C erhitzte, heisse Luft durch die Leitung 77 in den Reaktionsbehälter 11 geblasen. Über die an den Behälterdeckel 83 angeschlossene Leitung 75 verlässt die mit Lösungsmittel und HMDSO gesättigte Luft den Reaktor 11. Im Zyklonabscheider 77 werden sodann das Lösungsmittel, HMDSO und Wasser kondensiert, nachdem die Luft zuvor beim Durchgang durch den Wärmetauscher 79 etwas abgekühlt wurde. Zur Überraschung der Erfinder können die Fasermatten sogleich mit heisser Luft einer Temperatur zwischen 100 und 150 °C, vorzugsweise von ca. 150 °C, getrocknet werden, ohne dass diese dadurch brüchig oder zusammenfallen oder wesentlich schrumpfen würden. Vorzugsweise wird die Luft nach dem Auskondensierer der flüchtigen Bestandteile (Lösungsmittel und HMDSO) wieder erhitzt und danach neuerlich in den Reaktor geleitet.

Im Mixer/Settler 36 wird der eingesetzten Hydrophobierungslösung ca. 10 Vol.-% Wasser zugesetzt und das Gemisch während 10 bis 30 Minuten intensiv gerührt. Danach lässt man das Gemisch über Nacht stehen, wobei sich eine wässerige Phase am Boden absetzt. Die wässerige Phase wird abgetrennt und entsorgt. Die aufgearbeitete Hydrophobierläsung kann sodann, gegebenenfalls nachdem sie mit HMDSO aufkonzentriert wurde, in einem nächsten Batch wieder eingesetzt werden.

Die vorliegende Erfindung betrifft eine Anlage und ein Verfahren zur Herstellung eines Aerogel-Verbundwerkstoffs. Die Anlage ist dadurch charakterisiert, dass diese einen Reaktionsbehälter vorzugsweise mit einen herausnehmbarenTragkorb für die Aufnahme einer Mehrzahl von Fasermatten aufweist und eine Mehrzahl von Platten vorgesehen ist, um die Fasermatten voneinander zu beabstanden. Nach der Entfernung der Platten sind zwischen den Aerogel-Dämmplatten Zwischenräume vorhanden, durch die bei der Trocknung heisse Trocknungsluft durchgeblasen werden kann. Das Verfahren hat den Vorteil, dass die zu entsorgenden Mengen an Lösungsmittel und Reagenzien minimal sind und auch keine aufwändigen Aufarbeitungsprozesse nötig sind.

### Legende:

- 11: Reaktor
- 13: Vorratsbehälter für eine Organosilanverbindung (TEOS)
- 15: Vorratsbehälter für Lösungsmittel (EtOH)
- 17: Vorratsbehälter für Wasser
- 19: Vorratsbehälter für Schwefelsäure (H2SO4)
- 21: Vorratsbehälter für wässerige Ammoniaklösung (NH4OH)
- 23: Vorratsbehälter für Hydrophobierungsmittel (HMDSO)
- 25: Vorratsbehälter für Salpetersäure (HNO3)
- 27: Mischbehälter zur Herstellung einer alkoholischen TEOS-Lösung
- 29: Mischbehälter zur Herstellung einer verdünnten Mischung aus EtOH und H2SO4
- 31: Mischbehälter zur Herstellung einer verdünnten Salpetersäurelösung
- 33: Reaktionstank zur Herstellung eines Sols
- 34: Verbindungsleitung zwischen dem Mischbehälter 27 und dem Reaktionstank 33
- 35: Verbindungsleitung zwischen dem Mischbehälter 29 und dem Reaktionstank 33
- 36: Behälter für die Zwischenlagerung des teilweise verbrauchten Reaktionsgemisches
- 37: Leitung zur Verbindung von Vorratsbehälter 13 mit Mischbehälter 27
- 39: Leitung zur Verbindung von Vorratsbehälter 15 mit Mischbehälter 27
- 41: Leitung zur Verbindung von Vorratsbehälter 15 mit Mischbehälter 31
- 43: Leitung zur Verbindung von Vorratsbehälter 15 mit Mischbehälter 29
- 45: Leitung zur Verbindung von Vorratsbehälter 17 mit Reaktionsbehälter 33
- 47: Leitung zur Verbindung von Vorratsbehälter 19 mit Mischbehälter 29
- 49: Leitung zur Verbindung von Vorratsbehälter 21 mit dem Reaktor 11
- 51: Leitung zur Verbindung von Vorratsbehälter 23 mit dem Reaktor 11
- 53: Leitung zur Verbindung von Vorratsbehälter 25 mit Mischbehälter 31
- 55: Leitung zur Verbindung von Reaktionsbehälter 33 mit dem Reaktor 11
- 57: Leitung zur Verbindung von Mischbehälter 31 mit dem Reaktor 11
- 59: Leitung zur Verbindung des Reaktors 11 mit dem Zwischenbehälter 35
- 61: Leitung zur Verbindung des Zwischenbehälters 35 mit dem Vorratsbehälter
- 63: 15 Leitung zur Verbindung des Zwischenbehälters 35 mit dem Vorratsbehälter 23
- 65: Ableitung für Rückstände
- 67: Pumpe
- 69: Wärmetauscher
- 71: Zuleitung für das Trocknungsgas
- 73: Heizquelle in der Zuleitung 77
- 75: Ableitung
- 77: Pumpe
- 79: Destillationskolonne
- 81: Wanne
- 83: Deckel
- 85: (U-förmiger) Tragkorb
- 87: Plattform (Boden)
- 89a, 89b: Wände desTragkorbs
- 91: Tragkorb
- 93: Ösen
- 95: Fasermatten
- 97: Zwischenplatten
- 99: Innenwanne
- 101: Aussenschale
- 103: Leitbleche
- 105: Einlassstutzen
- 107: Auslassstutzen
- 109: Perforationen im Boden des Tragkorbs

## Patentansprüche

1. Anlage zur industriellen Herstellung einer faserverstärkten Aerogelplatte mit
a) einem Vorratsbehälter (15) für ein Lösungsmittel,
b) einem Vorratsbehälter (13) für eine Organosilanverbindung,
c) einem Vorratsbehälter (23) für ein Hydrophobierungsmittel,
d) einem Vorratsbehälter (19) für eine Säure,
e) einem Vorratsbehälter (21) für eine Base,
f) einem Reaktionsbehälter (11) für die Aufnahme einer Mehrzahl von Fasermatten,
g) Verbindungsleitungen zwischen den erwähnten Vorratsbehältern (13,15,19,21,23) und dem Reaktionsbehälter (11), **dadurch gekennzeichnet, dass**
h) der Reaktionsbehälter (11) mit einem Deckel (83) ausgestattet ist,
i) im Reaktionsbehälter (11) vorzugsweise ein herausnehmbarer Tragkorb (85) für die Aufnahme der Mehrzahl von Fasermatten (95) vorgesehen ist, und
j) dass eine Mehrzahl von Platten (97) vorgesehen sind, um die Fasermatten (95) voneinander zu beabstanden.

2. Anlage nach Anspruch 1, **dadurch gekennzeichnet, dass**
dass am Reaktionsbehälter (11) eine Wärmetauschervorrichtung (67,69) vorgesehen ist, um den Reaktionsbehälter (11) bzw. den Reaktorinhalt auf eine bestimmte Temperatur zu erwärmen oder abzukühlen.

3. Anlage nach Anspruch 1 oder 2, **dadurch gekennzeichnet,**
**dass** am Reaktionsbehälter (11) ein Anschluss zum Einblasen eines Trocknungsgases vorgesehen ist,
**dass** am Anschluss für das Trocknungsgas eine Zuleitung (71) angeschlossen ist, die mit einer Heizeinrichtung (73) in Verbindung steht,
**dass** am Reaktionsbehälter (11) eine Ableitung (75) für das Trocknungsgas vorgesehen ist, die mit einem Wärmetauscher (77) in Verbindung steht, und
**dass** ein Gebläse oder eine Pumpe (77) vorgesehen ist, um das Trocknungsgas in den Reaktionsbehälter (11) zu blasen oder anzusaugen.

4. Anlage nach einem der Ansprüche 1 bis 3, **dadurch gekennzeichnet, dass** im Reaktionsbehälter (11) ein herausnehmbarer Tragkorb (85) vorgesehen ist, in dem eine Mehrzahl von Fasermatten (95) anordenbar sind.

5. Anlage nach einem der Ansprüche 1 bis 4, **dadurch gekennzeichnet, dass** ein mit einem Rührwerk ausgestatteter Mixer/Settler (36) vorgesehen ist, der über eine Leitung (59) einerseits mit dem Reaktionsbehälter (11) und andererseits über eine Leitung (61) mit dem Vorratsbehälter (15) für das Lösungsmittel in Verbindung steht.

6. Anlage nach Anspruch 5, **dadurch gekennzeichnet, dass** die Leitung (61) mit einer Destillationsvorrichtung (79) in Verbindung steht.

7. Anlage nach Anspruch 5, **dadurch gekennzeichnet, dass** der Mixer/Settler (36) über eine Leitung (63) mit dem Vorratsbehälter (23) für das Hydrophobierungsmittel in Verbindung steht.

8. Anlage nach einem der Ansprüche 1 bis 7, **dadurch gekennzeichnet, dass** ein separater Heiz-/Kühlkreislauf vorgesehen ist, um den Reaktor aufzuheizen.

9. Verfahren zur Herstellung einer faserverstärkten Aerogelplatte mittels folgender Verfahrensschritte:
a) Herstellen eines silikatischen Sols
b) Mischen des silikatischen Sols mit einer Faserplatte oder einem Vlies und Erzeugen und gegebenenfalls Altern des Gels
c) Hydrophobieren des Gels mit einem Hydrophobierungsmittel in Gegenwart einer Säure als Katalysator, und
d) Trocknen des Gels durch unterkritisches Trocknen,
**dadurch gekennzeichnet,**
e) **dass** zu Beginn eine Mehrzahl von Fasermatten (95) und eine entsprechende Zahl von Zwischenplatten (97) alternierend in einem Reaktionsbehälter (11) angeordnet werden, sodass zwei Fasermatten (95) durch jeweils eine Zwischenplatte (97) voneinander getrennt resp. beabstandet sind,
f) **dass** das silikatische Sol in den Reaktionsbehälter (11) gegeben und die Gelierung gestartet und optional das Gel gealtert wird,
g) **dass** nach der Gelierung und dem optionalen Altern des Gels die Reaktionslösung abgelassen, die Zwischenplatten (97) entfernt und die gebildeten, faserverstärkten Aerogelplatten bei Temperaturen > 100 °C getrocknet werden,

10. Verfahren nach Anspruch 9, **dadurch gekennzeichnet, dass** die Trocknung der faserverstärkten Aerogelplatten im Reaktionsbehälter (11) erfolgt.

11. Verfahren nach Anspruch 9 oder 10, **dadurch gekennzeichnet, dass** die Trocknung durch Durchblasen eines heissen Trocknungsgases, vorzugsweise Luft, durch den Reaktionsbehälter (11) erfolgt, wobei das das Trocknungsgas vorzugsweise im Kreis geführt wird und im heissen Trocknungsgas aufgenommene flüchtige Stoffe auskondensiert werden.

12. Verfahren nach einem der Ansprüche 9 bis 11, **dadurch gekennzeichnet, dass** die Gelierung, Hydrophobierung und Trocknung (Schritte b, c und d) in ein und demselben Reaktionsbehälter (11) durchgeführt werden.

13. Verfahren nach einem der Ansprüche 9 bis 12, **dadurch gekennzeichnet, dass** der pH bei der Hydrophobierung auf einen Wert zwischen 0,2 und 6, vorzugsweise zwischen 0,5 und 5 und besonders bevorzugt zwischen 0,8 und 3 eingestellt wird.

14. Verfahren nach einem der Ansprüche 9 bis 13, **dadurch gekennzeichnet, dass** das Sol durch Hydrolyse von Tetraethoxysilan (TEOS) mit einem Massenanteil zwischen 5 und 30 Gewichtsprozenten SiO₂ und vorzugsweise mit einem Massenanteil zwischen 10 und 25 Gewichtsprozenten SiO₂ hergestellt wird.

## Claims

1. A system for the industrial production of a fiber-reinforced aerogel plate with
a) a reservoir (15) for a solvent,
b) a reservoir (13) for an organosilane compound,
c) a reservoir (23) for a hydrophobizing agent,
d) a reservoir (19) for an acid,
e) a reservoir (21) for a base,
f) a reaction vessel (11) for receiving a plurality of fiber mats,
g) connecting lines between the mentioned reservoirs (13, 15, 17, 19, 21, 23) and the reaction vessel (11),
**characterized in that**
h) the reaction vessel (11) is provided with a cover (83),
i) a preferably removable carrier basket (85) for receiving the plurality of fiber mats (95) is provided in the reaction vessel (11), and
j) a plurality of plates (97) is provided to space the fiber mats (95) apart from each other.

2. The system according to claim 1, **characterized in that** a heat exchanger device (67, 69) is provided on the reaction vessel (11) in order to heat or cool the reaction vessel (11) or the reactor contents to a specific temperature.

3. The system according to claim 1 or 2, **characterized in that**
a connection for blowing a drying gas is provided on the reaction vessel (11),
a supply line (71) is connected to the port for the drying gas, which supply line is connected to a heating device (73),
a discharge line (75) for the drying gas, which communicates with a heat exchanger (77), is provided on the reaction vessel (11), and
**in that** a blower or a pump (77) is provided for introducing the drying gas into or drawing it from the reaction vessel (11).

4. The system according to any one of claims 1 to 3, **characterized in that** in the reaction vessel (11) a removable carrier basket (85) is provided, in which a plurality of fiber mats (95) may be arranged.

5. The system according to any one of claims 1 to 4, **characterized in that** a mixer/settler (36) provided with an stirrer is provided and communicates via a line (59) on the one hand with the reaction vessel (11) and on the other hand via a line (61) with the reservoir (15) for the solvent.

6. The system according to claim 5, **characterized in that** the line (61) communicates with a distillation device (79).

7. The system according to claim 5, **characterized in that** the mixer/settler (36) is connected via a line (63) to the reservoir (23) for the hydrophobizing agent.

8. The system according to any one of claims 1 to 7, **characterized in that** a separate heating/cooling circuit is provided in order to heat the reactor.

9. A method for producing a fiber-reinforced aerogel plate by means of the following steps:
a) preparing a silicatic sol
b) mixing the silicatic sol with a fiberboard or a nonwoven and producing and optionally aging the gel
c) hydrophobizing the gel with a hydrophobizing agent in the presence of an acid as catalyst, and
d) drying the gel by subcritical drying,
**characterized in that**
e) initially a plurality of fiber mats (95) and a corresponding number of intermediate plates (97) are arranged alternately in a reaction vessel (11), so that two fiber mats (95) are separated or spaced from each other by a respective intermediate plate (97),
f) the silicate sol is added to the reaction vessel (11) and gelling is started and optionally the gel is aged,
g) after gelling and optional aging of the gel, the reaction solution is drained, the intermediate plates (97) are removed and the formed, fiber-reinforced aerogel plates are dried at temperatures >100°C.

10. The method according to claim 9, **characterized in that** the drying of the fiber-reinforced aerogel plates takes place within the reaction vessel (11).

11. The method according to any one of claims 9 or 10, **characterized in that** the drying takes place by blowing a hot drying gas, preferably air, through the reaction vessel (11), whereas the drying gas is circulated preferably in a circle, wherein volatiles absorbed in the hot drying gas are condensed out.

12. The method according to any one of claims 9 to 11, **characterized in that** the gelling, hydrophobizing and drying (steps b, c and d) are carried out in one and the same reaction vessel (11).

13. The method according to any one of claims 9 to 12, **characterized in that** the pH is adjusted in the hydrophobizing to a value between 0.2 and 6, preferably between 0.5 and 5 and particularly preferably between 0.8 and 3.

14. The method according to any one of claims 9 to 13, **characterized in that** a sol is prepared by hydrolysis of tetraethoxysilane (TEOS) with a mass fraction of between 5 and 30 percent by weight of SiO₂ and preferably with a mass fraction of between 10 and 25 percent by weight of SiO₂.

## Revendications

1. Installation pour la fabrication industrielle d'un panneau d'aérogel renforcé par des fibres avec
a) un récipient de stockage (15) pour un solvant,
b) un récipient de stockage (13) pour un composé organosilane,
c) un récipient de stockage (23) pour un agent rendant hydrophobe,
d) un récipient de stockage (19) pour un acide,
e) un récipient de stockage (21) pour une base,
f) un récipient de réaction (11) pour recevoir une multitude de nappes de fibres,
g) des conduites de liaison entre les récipients de stockage mentionnés (13, 15, 19, 21, 23) et le récipient de réaction (11),
**caractérisée en ce que**
h) le récipient de réaction (11) est équipé d'un couvercle (83),
i) il est prévu dans le récipient de réaction (11) de préférence un panier amovible (85) pour recevoir la multitude de panneaux de fibres (95) et
j) qu'il est prévu une multitude de panneaux (97) pour espacer les nappes de fibres les unes des autres.

2. Installation selon la revendication 1, **caractérisée en ce qu'**un dispositif d'échangeur thermique (67, 69) est prévu sur le récipient de réaction (11) pour réchauffer ou refroidir le récipient de réaction (11) ou le contenu du réacteur à une température déterminée.

3. Installation selon la revendication 1 ou 2, **caractérisée en ce qu'**il est prévu sur le récipient de réaction (11) un raccord pour insuffler un gaz de séchage, qu'une conduite d'amenée (71) qui est en relation avec un dispositif de chauffage (73) est raccordée au raccord pour le gaz de séchage, qu'il est prévu sur le récipient de réaction (11) une conduite d'évacuation (75) pour le gaz de séchage qui est en relation avec un échangeur thermique (77) et qu'il est prévu une soufflante ou une pompe (77) pour souffler ou aspirer le gaz de séchage dans le récipient de réaction (11).

4. Installation selon l'une des revendications 1 à 3, **caractérisée en ce qu'**un panier amovible (85) dans lequel une multitude de nappes de fibres (95) peut être placée est prévu sur le récipient de réaction (11).

5. Installation selon l'une des revendications 1 à 4, **caractérisée en ce qu'**il est prévu un mélangeur/décanteur (36), équipé d'un agitateur, qui est en relation par une conduite (59) d'une part avec le récipient de réaction (11) et d'autre part par une conduite (61) avec le récipient de stockage (15) pour le solvant.

6. Installation selon la revendication 5, **caractérisée en ce que** la conduite (61) est en relation avec un dispositif de distillation (79).

7. Installation selon la revendication 5, **caractérisée en ce que** le mélangeur/décanteur (36) est en relation par une conduite (63) avec le récipient de stockage (23) pour l'agent rendant hydrophobe.

8. Installation selon l'une des revendications 1 à 7, **caractérisée en ce qu'**il est prévu un circuit de chauffage/refroidissement séparé pour réchauffer le réacteur.

9. Procédé pour la fabrication d'un panneau d'aérogel renforcé par des fibres au moyen des étapes de procédé suivantes :
a) fabrication d'un sol de silicate,
b) mélange du sol de silicate à un panneau de fibres ou un intissé et production et, le cas échéant, vieillissement du gel,
c) hydrophobisation du gel avec un agent rendant hydrophobe en présence d'un acide comme catalyseur et
d) séchage du gel par séchage subcritique,
**caractérisé en ce**
e) **qu'**au début une multitude de nappes de fibres (95) et un nombre correspondant de nappes intermédiaires (97) sont placés en alternance dans un récipient de réaction (11) si bien que deux nappes de fibres sont séparées ou espacées l'une de l'autre par respectivement une nappe intermédiaire,
f) **que** le sol de silicate est introduit dans le récipient de réaction (11) et que la gélification commence et facultativement le gel est vieilli,
g) **qu'**après la gélification et le vieillissement facultatif du gel la solution de réaction est évacuée, les nappes intermédiaires (97) sont enlevées et les panneaux d'aérogel formés, renforcés par des fibres, sont séchés à des températures > 100°C.

10. Procédé selon la revendication 9, **caractérisé en ce que** le séchage des panneaux d'aérogel renforcés par des fibres se fait dans le récipient de réaction (11).

11. Procédé selon la revendication 9 ou 10, **caractérisé en ce que** le séchage se fait par insufflation d'un gaz de séchage chaud, de préférence de l'air, à travers le récipient de réaction (11), cependant que le gaz de séchage circule de préférence en circuit fermé et que des matières volatiles absorbées dans le gaz de séchage chaud sont séparées par condensation.

12. Procédé selon l'une des revendications 9 à 11, **caractérisé en ce que** la gélification, l'hydrophobisation et le séchage (étapes b, c et d) sont exécutés dans un même récipient de réaction (11).

13. Procédé selon l'une des revendications 9 à 12, **caractérisé en ce que** le pH est réglé, lors de l'hydrophobisation, à une valeur entre 0,2 et 6, de préférence entre 0,5 et 5 et de manière particulièrement préférée entre 0,8 et 3.

14. Procédé selon l'une des revendications 9 à 13, **caractérisé en ce que** le sol est fabriqué par hydrolyse de tétraéthoxysilane (TEOS) avec un pourcentage en masse entre 5 et 30% en poids de SiO₂ et de préférence avec un pourcentage en masse entre 10 et 25% en poids de SiO₂.
